# EUROPEAN PATENT APPLICATION

(11) **EP 3 184 597 A1**
(43) Date of publication of application: **28.06.2017**
(21) Application number: 15833806.1
(22) Date of filing: 17.08.2015
(51) Int. Cl.: C09J 153/00, C08F 297/02, C09J 7/00, C09J 7/02, C09J 11/06, C09J 11/08, C09J 133/04

(54) **ACRYLIC ADHESIVE COMPOSITION AND ADHESIVE PRODUCT**

(30) Priority: 20.08.2014 JP 2014167556
(71) Applicant: Kuraray Co., Ltd., Kurashiki-shi, Okayama 710-0801 (JP)
(72) Inventor: NAKADA, Kanayo, Tsukuba-shi Ibaraki 305-0841 (JP); MORISHITA, Yoshihiro, Tsukuba-shi Ibaraki 305-0841 (JP)
(74) Representative: Müller-Boré & Partner Patentanwälte PartG mbB
(86) International application number: PCT/JP2015/073021
(87) International publication number: WO 2016/027767

(57) **Abstract**

The present invention provides pressure-sensitive adhesive compositions which have excellent adhesion force, cohesion force, tack and holding power, and pressure-sensitive adhesive products including the pressure-sensitive adhesive compositions. The pressure-sensitive adhesive composition includes (i) 100 parts by mass of an acrylic block copolymer (I) including at least one polymer block (A) containing methacrylate ester units and at least one polymer block (B) containing acrylate ester units, the acrylic block copolymer (I) having a weight average molecular weight of 30,000 to 300,000, the acrylate ester units in the polymer block (B) including not less than 80 mass% of units from an acrylate ester (1) represented by the general formula (1): CH₂=CH-COOR² (wherein R² is an organic group having 7 to 12 carbon atoms); (ii) 1 to 300 parts by mass of a tackifier resin; and (iii) 1 to 200 parts by mass of at least one plasticizer selected from process oils, and organic acid esters and oligomers thereof.

## Description

### TECHNICAL FIELD

The present invention relates to pressure-sensitive adhesive compositions including a specific acrylic block copolymer and a specific plasticizer, and to pressure-sensitive adhesive products having a pressure-sensitive adhesive layer including the pressure-sensitive adhesive composition.

### BACKGROUND ART

As pressure-sensitive adhesives used for pressure-sensitive adhesive products each having a pressure-sensitive adhesive layer on at least a part of a surface of a base layer, such as pressure-sensitive adhesive sheets, pressure-sensitive adhesive films and pressure-sensitive adhesive tapes, solution type pressure-sensitive adhesives comprising base polymers, such as rubber-based pressure-sensitive adhesives and acrylic pressure-sensitive adhesives, have been frequently used in the past. In addition, hotmelt pressure-sensitive adhesives and aqueous emulsion-type pressure-sensitive adhesives have recently come into use. In particular, acrylic pressure-sensitive adhesives have gained a wide use because of their excellent transparency, weather resistance and durability. Some of the acrylic pressure-sensitive adhesives that have been presented from the points of view of application properties and pressure-sensitive adhesion properties are those pressure-sensitive adhesives including acrylic block copolymers.

For example, Patent Document 1 presents a pressure-sensitive adhesive composition which includes an acrylic block copolymer and a tackifier resin having a specific solubility parameter. Patent Document 2 proposes a pressure-sensitive adhesive composition which includes an acrylic block copolymer, a tackifier resin and a plasticizer in a specific ratio. Further, Patent Document 3 presents a surface-protective pressure-sensitive adhesive sheet which has a pressure-sensitive adhesive layer that includes an acrylic pressure-sensitive adhesive including a plurality of acrylic block copolymers and a tackifier resin. However, the pressure-sensitive adhesives described in Patent Documents 1 to 3 have room for improvements in properties such as adhesion force, tack and holding power.

### CITATION LIST

### PATENT LITERATURE

Patent Document 1: WO 2007/029783
Patent Document 2: JP-A-2010-106230
Patent Document 3: JP-A-2013-136653
Patent Document 4: JP-A-H06-93060
Patent Document 5 JP-A-H05-507737
Patent Document 6: JP-A-H11-335432

### NON PATENT LITERATURE

Non Patent Document 1: Macromolecular Chemistry and Physics, 2000, vol. 201, pp. 1108-1114

### SUMMARY OF INVENTION

### TECHNICAL PROBLEM

An object of the present invention is to provide pressure-sensitive adhesive compositions which have excellent adhesion force, cohesion force, tack and holding power and can be easily controlled in viscosity, and pressure-sensitive adhesive products including the pressure-sensitive adhesive compositions.

### SOLUTION TO PROBLEM

The present invention achieves the above object by providing the following:
[1] A pressure-sensitive adhesive composition including:
   (i) 100 parts by mass of an acrylic block copolymer (I) including at least one polymer block (A) containing methacrylate ester units and at least one polymer block (B) containing acrylate ester units, the acrylic block copolymer (I) having a weight average molecular weight of 30,000 to 300,000, the acrylate ester units in the polymer block (B) including not less than 80 mass% of units from an acrylate ester (1) represented by the general formula (1):

      CH₂=CH-COOR²

      (wherein R² is an organic group having 7 to 12 carbon atoms);
   (ii) 1 to 300 parts by mass of a tackifier resin; and
   (iii) 1 to 200 parts by mass of at least one plasticizer selected from process oils, and organic acid esters and oligomers thereof.
[2] The pressure-sensitive adhesive composition described in [1], wherein the plasticizer (iii) is a process oil.
[3] The pressure-sensitive adhesive composition described in [1] or [2], wherein the tackifier resin (ii) is at least one selected from hydrocarbon resins, terpene resins, rosin resins and hydrogenated products of these resins.
[4] The pressure-sensitive adhesive composition described in any of [1] to [3], wherein the acrylate ester (1) represented by the formula (1) is 2-ethylhexyl acrylate.
[5] The pressure-sensitive adhesive composition described in any of [1] to [4], wherein the acrylate ester units in the polymer block (B) consist solely of units from an acrylate ester (1) represented by the general formula (1):

   CH₂=CH-COOR²

   (wherein R² is an organic group having 7 to 12 carbon atoms).
[6] The pressure-sensitive adhesive composition described in any of Claims 1 to 5, wherein the composition includes two or more kinds of tackifier resins (ii).
[7] A pressure-sensitive adhesive product including a pressure-sensitive adhesive layer including the pressure-sensitive adhesive composition described in any of [1] to [6].
[8] A laminate including a pressure-sensitive adhesive layer including the pressure-sensitive adhesive composition described in any of [1] to [6].
[9] A film including a pressure-sensitive adhesive layer including the pressure-sensitive adhesive composition described in any of [1] to [6].

### ADVANTAGEOUS EFFECTS OF INVENTION

The pressure-sensitive adhesive compositions of the present invention have excellent compatibility, adhesion force, cohesion force, tack and holding power and can be easily controlled in viscosity. The pressure-sensitive adhesive products of the invention include such pressure-sensitive adhesive compositions.

### DESCRIPTION OF EMBODIMENTS

The present invention will be described in detail hereinbelow. In the specification, "(meth)acrylate ester" is a general term indicating both "methacrylate ester" and "acrylate ester", and "(meth)acrylic" is a general term indicating both "methacrylic" and "acrylic".

A pressure-sensitive adhesive composition of the invention includes an acrylic block copolymer (I). The acrylic block copolymer (I) includes at least one polymer block (A) containing methacrylate ester units and at least one polymer block (B) containing acrylate ester units. The acrylate ester units in the polymer block (B) include not less than 80 mass% of units from an acrylate ester (1) represented by the general formula (1) : CH₂=CH-COOR² (wherein R² is an organic group having 7 to 12 carbon atoms).

The weight average molecular weight (Mw) of the acrylic block copolymer (I) as a whole that is used in the invention is 30,000 to 300,000. To facilitate the production of the pressure-sensitive adhesive composition, the weight average molecular weight is preferably 40,000 to 200,000, and more preferably 50,000 to 150,000. To attain higher adhesion force to metals such as SUS, it is particularly preferable that the weight average molecular weight (Mw) is 70,000 to 150,000.

When the pressure-sensitive adhesive composition of the invention is applied by a method in which the composition is melted by heating such as hot melt coating, T-die extrusion, blown-film extrusion, calendering or lamination, the weight average molecular weight (Mw) of the acrylic block copolymer (I) as a whole is preferably 30,000 to 150,000, and more preferably 35,000 to 100,000 from the point of view of the productivity in coating operation or film formation. To attain a stable viscosity behavior during the process such as extrusion and to achieve low viscosity and excellent application properties in the hot melt coating operation, it is particularly preferable that the weight average molecular weight (Mw) is 40,000 to 90,000.

The ratio (Mw/Mn) of the weight average molecular weight (Mw) to the number average molecular weight (Mn) of the acrylic block copolymer (I) as a whole that is used in the invention is preferably 1.0 to 1.5. To ensure that the pressure-sensitive adhesive composition will attain high cohesion force at high temperatures, the ratio is more preferably 1.0 to 1.4, and still more preferably 1.0 to 1.3.

In the acrylic block copolymer (I) used in the invention, the content of the polymer block (A) is preferably 5 to 95 mass% and the content of the polymer block (B) is preferably 95 to 5 mass%. To ensure that the pressure-sensitive adhesive composition will exhibit good pressure-sensitive adhesion properties and that the block copolymer or the pressure-sensitive adhesive composition including the copolymer can be supplied in an easily handleable form (such as, for example, pellets), it is preferable that the polymer block (A) represent 15 to 60 mass% and the polymer block (B) 85 to 40 mass%, it is more preferable that the polymer block (A) represent 18 to 60 mass% and the polymer block (B) 82 to 40 mass%, it is still more preferable that the polymer block (A) represent 22 to 50 mass% and the polymer block (B) 78 to 50 mass%, and it is particularly preferable that the polymer block (A) represent 22 to 40 mass% and the polymer block (B) 78 to 60 mass%. When the content of the polymer block (B) is 85 to 40 mass%, the occurrence of whitening after storage under humid and hot conditions is advantageously reduced. When the contents of the polymer blocks (A) and (B) are in the above ranges, the value of tanδ of viscoelasticity measured at a frequency of 1 Hz tends to be in the range of 1 × 10⁻² to 1 × 10⁻¹ at 50 to 100°C and consequently the obtainable pressure-sensitive adhesive advantageously exhibits a small increase in adhesion force with time.

The acrylic block copolymer (I) is preferably represented by any of the following general formulae in which "A" denotes the polymer block (A) and "B" the polymer block (B):
(A-B)n
(A-B)n-A
B-(A-B)n
(A-B)n-Z
(B-A)n-Z
(wherein n is an integer of 1 to 30, and Z represents a coupling site (a coupling site resulting from the formation of a chemical bond by reaction between a coupling agent and a polymer end)). The value of n is preferably 1 to 15, more preferably 1 to 8, and still more preferably 1 to 4. Of the above structures, a linear block copolymer represented by (A-B)n, (A-B)n-A or B-(A-B)n is preferable.

Examples of the methacrylate ester that is a structural unit of the polymer block (A) include methacrylate esters having no functional groups such as methyl methacrylate, ethyl methacrylate, isopropyl methacrylate, n-propyl methacrylate, n-butyl methacrylate, isobutyl methacrylate, sec-butyl methacrylate, tert-butyl methacrylate, n-hexyl methacrylate, cyclohexyl methacrylate, 2-ethylhexyl methacrylate, n-octyl methacrylate, lauryl methacrylate, tridecyl methacrylate, stearyl methacrylate, isobornyl methacrylate, phenyl methacrylate and benzyl methacrylate; and methacrylate esters having a functional group such as methoxyethyl methacrylate, ethoxyethyl methacrylate, diethylaminoethyl methacrylate, 2-hydroxyethyl methacrylate, 2-aminoethyl methacrylate, glycidyl methacrylate and tetrahydrofurfuryl methacrylate.

Of these, methacrylate esters having no functional groups are preferable in order to enhance the transparency, heat resistance and durability of the obtainable pressure-sensitive adhesive composition. More preferred esters are methyl methacrylate, ethyl methacrylate, tert-butyl methacrylate, cyclohexyl methacrylate, isobornyl methacrylate and phenyl methacrylate, with methyl methacrylate being more preferable. Methyl methacrylate is more preferable also because the phase separation between the polymer block (A) and the polymer block (B) becomes clearer so that the pressure-sensitive adhesive composition exhibits particularly high cohesion force. The polymer block (A) may be composed of a single methacrylate ester, or two or more kinds of such esters. To attain higher durability, it is preferable that the acrylic block copolymer (I) include two or more polymer blocks (A). In this case, the polymer blocks (A) may be the same as or different from one another.

The weight average molecular weight (Mw) of the polymer block (A), although not particularly limited, is preferably in the range of 1,000 to 50,000, and more preferably in the range of 4,000 to 20,000. If the weight average molecular weight (Mw) of the polymer block (A) is below this range, the obtainable acrylic block copolymer (I) will have insufficient cohesion force. If the weight average molecular weight (Mw) of the polymer block (A) exceeds the above range, the obtainable acrylic block copolymer (I) will have so high a melt viscosity that the productivity or moldability of the acrylic block copolymer (I) may be deteriorated at times. The proportion of the methacrylate ester units present in the polymer block (A) is preferably 60 mass% of the polymer block (A), and is more preferably not less than 80 mass%, and still more preferably not less than 90 mass%.

The polymer block (B) includes units from an acrylate ester (1) represented by the formula (1). By virtue of this configuration, the obtainable acrylic block copolymer (I) has a lower polarity than when the polymer block includes units from an acrylate ester having an organic group with less carbon atoms (for example, n-butyl acrylate). Consequently, the copolymer attains enhanced compatibility with low-polarity components, specifically, tackifier resins such as hydrocarbon resins, and plasticizers such as process oils.

Examples of the acrylate ester (1) of the formula (1) that is a structural unit of the polymer block (B) include 2-ethylhexyl acrylate, n-octyl acrylate, isooctyl acrylate, decyl acrylate, isobornyl acrylate, lauryl acrylate, benzyl acrylate and phenoxyethyl acrylate.

In order to ensure that the obtainable pressure-sensitive adhesive composition will attain enhancements in transparency, flexibility, cold resistance and pressure-sensitive adhesion properties at low-temperatures, preferred acrylate esters, among others, are 2-ethylhexyl acrylate, n-octyl acrylate, isooctyl acrylate, lauryl acrylate and phenoxyethyl acrylate. To ensure that the obtainable pressure-sensitive adhesive composition will attain excellent pressure-sensitive adhesion properties (such as tack and adhesion force) at low temperatures (10 to -40°C) and will exhibit stable adhesion force in a wide range of release rate, 2-ethylhexyl acrylate, n-octyl acrylate and isooctyl acrylate are more preferable. Further, 2-ethylhexyl acrylate is particularly preferable because the phase separation between the polymer block (A) and the polymer block (B) becomes clearer so that the pressure-sensitive adhesive composition exhibits very high cohesion force. The above esters may be used singly, or two or more may be used in combination.

In addition to the acrylate ester (1) units, the polymer block (B) may include units from an acrylate ester (2) represented by the general formula (2): CH₂=CH-COOR¹ (wherein R¹ is an organic group having 4 to 6 carbon atoms). That is, the polymer block (B) may be a copolymer block of an acrylate ester (1) described above and an acrylate ester (2). Examples of the acrylate esters (2) include acrylate esters having no functional groups such as n-butyl acrylate, isobutyl acrylate, sec-butyl acrylate, tert-butyl acrylate, amyl acrylate, isoamyl acrylate, n-hexyl acrylate, cyclohexyl acrylate and phenyl acrylate; and acrylate esters having a functional group such as methoxyethyl acrylate, ethoxyethyl acrylate, diethylaminoethyl acrylate, 2-hydroxyethyl acrylate, 2-aminoethyl acrylate, glycidyl acrylate and tetrahydrofurfuryl acrylate.

Of these, acrylate esters having no functional groups are preferable in order to enhance the transparency, flexibility, cold resistance and pressure-sensitive adhesion properties at low-temperatures of the obtainable pressure-sensitive adhesive composition. More preferred acrylate esters, among others, are n-butyl acrylate and n-hexyl acrylate. The esters may be used singly, or two or more may be used in combination.

Of the acrylate ester units in the polymer block (B), not less than 80 mass% is represented by the acrylate ester (1) units. By virtue of the acrylate ester (1) units representing not less than 80 mass%, the acrylic block copolymer (I) attains excellent whitening resistance and cohesion force and shows higher compatibility with tackifier resins. The content of the acrylate ester (1) units is preferably not less than 85 mass%, and more preferably not less than 90 mass% relative to the acrylate ester units forming the polymer block (B). In a preferred embodiment, the acrylate ester units in the polymer block (B) consist solely of the acrylate ester (1) units to attain excellent tack, holding power and compatibility.

When the polymer block (B) includes units from an acrylate ester (2), the content thereof is preferably not more than 20 mass%, more preferably not more than 15 mass%, and still more preferably not more than 10 mass% of the acrylate ester units forming the polymer block (B). The contents of the acrylate ester (1) units and the acrylate ester (2) units in the polymer block (B) may be measured by a method such as ¹H-NMR.

In the case where the polymer block (B) includes both acrylate ester (2) units and acrylate ester units (1), examples of the combinations of the acrylate esters used in the acrylic acids include n-butyl acrylate/2-ethylhexyl acrylate, n-butyl acrylate/octyl acrylate, n-hexyl acrylate/2-ethylhexyl acrylate, n-butyl acrylate/lauryl acrylate, n-butyl acrylate/benzyl acrylate, and n-butyl acrylate/[2-ethylhexyl acrylate/lauryl acrylate].

When the polymer block (B) includes a plurality of types of acrylate ester units, the polymer block may be a random copolymer or block copolymer of such acrylate esters, or may be a tapered block copolymer. When the acrylic block copolymer (I) includes two or more polymer blocks (B), the structures of the polymer blocks (B) may be the same as or different from one another. The proportion of the acrylate ester units present in the polymer block (B) is preferably 60 mass% of the polymer block (B), and is more preferably not less than 80 mass%, and still more preferably not less than 90 mass%.

The polymer block (A) and the polymer block (B) may contain components of each other while still ensuring that the advantageous effects of the invention will not be impaired. Where necessary, these polymer blocks may contain other monomers. Examples of such additional monomers include carboxyl group-containing vinyl monomers such as (meth)acrylic acid, crotonic acid, maleic acid, maleic anhydride, fumaric acid and (meth)acrylamide; functional group-containing vinyl monomers such as (meth)acrylonitrile, vinyl acetate, vinyl chloride and vinylidene chloride; aromatic vinyl monomers such as styrene, α-methylstyrene, p-methylstyrene and m-methylstyrene; conjugated diene monomers such as butadiene and isoprene; olefin monomers such as ethylene, propylene, isobutene and octene; and lactone monomers such as ε-caprolactone and valerolactone. When used, these monomers are usually added in a small amount. The amount is preferably not more than 40 mass%, more preferably not more than 20 mass%, and still more preferably not more than 10 mass% relative to the total mass of the monomers used in each polymer block.

The acrylic block copolymer (I) used in the invention may contain other polymer block as required in addition to the polymer block (A) and the polymer block (B). Examples of such additional polymer blocks include polymer blocks or copolymer blocks including such monomers as styrene, α-methylstyrene, p-methylstyrene, m-methylstyrene, acrylonitrile, methacrylonitrile, ethylene, propylene, isobutene, butadiene, isoprene, octene, vinyl acetate, maleic anhydride, vinyl chloride and vinylidene chloride; and polymer blocks including polyethylene terephthalate, polylactic acid, polyurethane and polydimethylsiloxane. Examples of the polymer blocks further include hydrogenated products of polymer blocks including conjugated diene compounds such as butadiene and isoprene.

The acrylic block copolymer (I) used in the invention may be produced by any method without limitation as long as the obtainable polymer satisfies the requirements in the present invention regarding the chemical structure. Methods in accordance with known techniques may be adopted. In general, a block copolymer with a narrow molecular weight distribution is obtained by the living polymerization of monomers that will form structural units. Examples of the living polymerization processes include living polymerization using an organic rare earth metal complex as a polymerization initiator (see Patent Document 4), living anionic polymerization performed with an organic alkali metal compound as a polymerization initiator in the presence of a mineral acid salt such as an alkali metal or alkaline earth metal salt (see Patent Document 5), living anionic polymerization performed with an organic alkali metal compound as a polymerization initiator in the presence of an organoaluminum compound (see Patent Document 6), and atom transfer radical polymerization (ATRP) (see Non Patent Document 1).

Of these production processes, living anionic polymerization performed with an organic alkali metal compound as a polymerization initiator in the presence of an organoaluminum compound is advantageous in that the obtainable block copolymer has high transparency, is less odorous because of little residual monomers, and generates fewer bubbles after the application of a pressure-sensitive adhesive composition including the copolymer. Other advantages are that the methacrylate ester polymer blocks have a highly syndiotactic molecular structure to provide an increase in the heat resistance of the pressure-sensitive adhesive composition, and that the living polymerization is feasible under relatively mild temperature conditions and thus the environmental load in industrial production (mainly the electricity for refrigerators to control the polymerization temperature) is small.

Examples of the organoaluminum compounds include those organoaluminum compounds represented by the following general formula (3).

AlR³R⁴R⁵ (3)

(In the formula, R³, R⁴ and R⁵ are each independently an optionally substituted alkyl group, an optionally substituted cycloalkyl group, an optionally substituted aryl group, an optionally substituted aralkyl group, an optionally substituted alkoxy group, an optionally substituted aryloxy group or a N, N-disubstituted amino group, or R³ is any of these groups and R⁴ and R⁵ together form an optionally substituted arylenedioxy group.)

From points of view such as high living properties in the polymerization and easy handling, preferred organoaluminum compounds represented by the general formula (3) are, among others, isobutylbis(2,6-di-tert-butyl-4-methylphenoxy)aluminum, isobutylbis(2,6-di-tert-butylphenoxy)aluminum and isobutyl[2,2'-methylenebis(4-methyl-6-tert-butylphenoxy)]a luminum.

Examples of the organic alkali metal compounds include alkyllithiums and alkyldilithiums such as n-butyllithium, sec-butyllithium, isobutyllithium, tert-butyllithium, n-pentyllithium and tetramethylenedilithium; aryllithiums and aryldilithiums such as phenyllithium, p-tolyllithium and lithiumnaphthalene; aralkyllithiums and aralkyldilithiums such as benzyllithium, diphenylmethyllithium and dilithium formed by the reaction of diisopropenylbenzene and butyllithium; lithiumamides such as lithiumdimethylamide; and lithium alkoxides such as methoxylithium and ethoxylithium. These compounds may be used singly, or two or more may be used in combination. In particular, alkyllithiums are preferable because of high polymerization initiation efficiency. Tert-butyllithium and sec-butyllithium are more preferable, and sec-butyllithium is still more preferable.

The living anionic polymerization is usually carried out in the presence of a solvent that is inactive in the polymerization reaction. Examples of the solvents include aromatic hydrocarbons such as benzene, toluene and xylene; halogenated hydrocarbons such as chloroform, methylene chloride and carbon tetrachloride; and ethers such as tetrahydrofuran and diethyl ether.

The block copolymer may be produced by, for example, repeating as many times as desired a step in which a desired polymer block (such as a polymer block (A) or a polymer block (B)) is formed onto a desired living polymer end obtained by the polymerization of a monomer, and terminating the polymerization reaction. Specifically, the acrylic block copolymer (I) may be produced by, for example, performing polymerization with an organic alkali metal compound as a polymerization initiator in the presence of an organoaluminum compound through a plurality of steps including a first step of polymerizing a monomer for forming a first polymer block, a second step of polymerizing a monomer for forming a second polymer block and optionally a third step of polymerizing a monomer for forming a third polymer block, and terminating the polymerization reaction by reacting the active end of the resultant polymer with a terminator such as an alcohol. By this method, a binary block (diblock) copolymer composed of polymer block (A)-polymer block (B), a ternary block (triblock) copolymer composed of polymer block (A)-polymer block (B)-polymer block (A), a quaternary block copolymer composed of polymer block (A)-polymer block (B)-polymer block (A)-polymer block (B), or the like can be produced.

The polymerization temperature is preferably 0 to 100°C when the reaction forms a polymer block (A), and is preferably -50 to 50°C when the reaction forms a polymer block (B). If the polymerization temperature is below this range, the reaction is slow and takes a long time to complete. If, on the other hand, the polymerization temperature is higher than the above range, more living polymer ends are deactivated to broaden the molecular weight distribution or to cause a failure to obtain a desired block copolymer. The polymerization of a polymer block (A) and that of a polymer block (B) may be each accomplished in 1 second to 20 hours.

The pressure-sensitive adhesive composition of the invention includes a tackifier resin. By virtue of the incorporation of a tackifier resin, the inventive pressure-sensitive adhesive composition attains enhancements in adhesion force, tack and compatibility. Examples of the tackifier resins include hydrocarbon resins, terpene resins, rosin resins and hydrogenated products of these resins (hereinafter, sometimes written as "hydrogenated" resins).

The hydrocarbon resins in the invention are oligomers obtained by polymerizing a raw material including a C₅ fraction, a C₉ fraction, a component(s) purified from a C₅ fraction, a component (s) purified from a C₉ fraction, or a mixture of these fractions or purified components. The C₅ fraction usually includes cyclopentadiene, dicyclopentadiene, isoprene, 1,3-pentadiene, 2-methyl-l-butene, 2-methyl-2-butene, 1-pentene, 2-pentene and cyclopentene. The C₉ fraction usually includes styrene, allylbenzene, α-methylstyrene, vinyltoluene, β-methylstyrene and indene. The C₉ fraction sometimes contains a small amount of a C₈ fraction and a C₁₀ fraction.

The hydrocarbon resins are largely classified into C₅ resins from the C₅ fraction or a component (s) purified therefrom (also written as aliphatic hydrocarbon resins), C₉ resins from the C₉ fraction or a component(s) purified therefrom (also written as aromatic hydrocarbon resins), and C₅-C₉ copolymer resins from a mixture of the C₅ fraction or a component(s) purified therefrom and the C₉ fraction or a component(s) purified therefrom (also written as aliphatic-aromatic copolymer hydrocarbon resins).

The terpene resins in the invention are oligomers obtained by polymerizing a raw material including a terpene monomer. Terpenes generally indicate polymers of isoprene (C₅H₈) and are classified into monoterpene (C₁₀H₁₆), sesquiterpene (C₁₅H₂₄), diterpene (C₂₀H₃₂), and so on. The terpene monomers are monomers which have these structures as base skeletons. Examples thereof include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, γ-terpineol, sabinene, paramenthadienes and carenes. The raw material including a terpene monomer may include other monomer copolymerizable with the terpene monomer. Examples of such additional monomers include coumarone monomers such as benzofuran (C₈H₆O) ; vinyl aromatic compounds such as styrene, α-methylstyrene, vinyltoluene, divinyltoluene and 2-phenyl-2-butene; phenolic monomers such as phenol, cresol, xylenol, propylphenol, nonylphenol, hydroquinone, resorcinol, methoxyphenol, bromophenol, bisphenol A and bisphenol F.

The rosin resins in the invention are amber and amorphous natural resins obtained from pine and are chiefly composed of a mixture of abietic acid and isomers thereof. The rosin resins also include modified products such as esters and polymers obtained by making use of the reactivity of abietic acid or isomers thereof.

The tackifier resins may be purchased in the market. Some suitable tackifier resins which are available in the market are hydrocarbon resins such as QUINTONE 100 series (manufactured by ZEON CORPORATION), ARKON M series and ARKON P series (manufactured by ARAKAWA CHEMICAL INDUSTRIES, LTD.) and I-MARV series (manufactured by Idemitsu Kosan Co. , Ltd.); terpene resins such as CLEARON series, YS POLYSTER series and YS RESIN series (all manufactured by YASUHARA CHEMICAL CO., LTD.) and TAMANOL 901 (manufactured by ARAKAWA CHEMICAL INDUSTRIES, LTD. and rosin resins such as PINECRYSTAL KE-100, PINECRYSTAL KE-311, PINECRYSTAL KE-359, PINECRYSTAL KE-604, PINECRYSTAL D-6250, PENSEL D125, PENSEL D160, ESTER GUM H series and ESTER GUM HP series (all manufactured by ARAKAWA CHEMICAL INDUSTRIES, LTD.) and Foral 85 (manufactured by Pinova).

Of the tackifier resins, hydrocarbon resins, terpene resins, rosin resins and hydrogenated products of these resins are preferable because high adhesion force and tack are obtained. To ensure adhesion force to a wide variety of adherends, hydrocarbon resins, terpene resins and hydrogenated products of these resins are more preferable. These resins may be used singly, or two or more may be used in combination. To ensure high adhesion force, the tackifier resin is preferably one having a softening point of 50 to 160°C.

Of the tackifier resins, one which is selected from hydrocarbon resins, terpene resins and rosin resins and has an iodine value measured in accordance with JIS K0070 of not more than 120 g is preferable because the use of such a tackifier resin realizes excellent weather resistance, little coloration and excellent adhesion force and tack, and also because excellent holding power and higher compatibility tend to be obtained. To ensure excellent compatibility with the acrylic block copolymer (I), the iodine value of the tackifier resin is preferably not more than 100 g, more preferably not more than 80 g, still more preferably not more than 50 g, particularly preferably not more than 30 g, and most preferably not more than 20 g.

Of the tackifier resins, those satisfying the above iodine value are, among others, hydrogenated hydrocarbon resins, hydrogenated terpene resins and hydrogenated rosin resins.

Some tackifier resins satisfying the above iodine value are hydrocarbon resins such as QUINTONE 100 series (manufactured by ZEON CORPORATION), ARKON M series and ARKON P series (manufactured by ARAKAWA CHEMICAL INDUSTRIES, LTD.) and I-MARV series (manufactured by Idemitsu Kosan Co., Ltd.); terpene resins such as CLEARON series and YS POLYSTER UH (manufactured by YASUHARA CHEMICAL CO., LTD. and rosin resins such as ESTER GUM H series and ESTER GUM HP series (manufactured by ARAKAWA CHEMICAL INDUSTRIES, LTD.).

Of the tackifier resins, those hydrocarbon resins and terpene resins (typically, hydrogenated hydrocarbon resins and hydrogenated terpene resins) satisfying the above iodine value are preferable because excellent weather resistance is obtained and coloration is reduced. In particular, those hydrocarbon resins (typically, hydrogenated hydrocarbon resins) satisfying the above iodine value are more preferable because excellent adhesion force to a wide variety of adherends and tack are realized , and also because excellent holding power and higher compatibility tend to be obtained. Those C₅-C₉ copolymer resins (typically, hydrogenated C₅-C₉ copolymer resins) satisfying the above iodine value are particularly preferable. Examples of the C₅-C₉ copolymer resins satisfying the above iodine value include ARKON M series and ARKON P series (manufactured by ARAKAWA CHEMICAL INDUSTRIES, LTD.) and I-MARV series (manufactured by Idemitsu Kosan Co., Ltd.).

The content of the tackifier resin is 1 to 300 parts by mass per 100 parts by mass of the acrylic block copolymer (I). To attain an excellent balance between high adhesion force, tack and cohesion force, the content is more preferably 1 to 100 parts by mass, still more preferably 3 to 70 parts by mass, even more preferably 5 to 50 parts by mass, particularly preferably 5 to 40 parts by mass, and most preferably 5 to 35 parts by mass.

The pressure-sensitive adhesive composition of the invention includes at least one plasticizer selected from process oils, and organic acid esters and oligomers thereof. By the incorporation of such a plasticizer, the inventive pressure-sensitive adhesive composition attains an excellent balance between adhesion force and tack, and generally the cost of the pressure-sensitive adhesive composition as a whole can be reduced. Examples of the process oils include naphthene oils such as SUNPURE N90 and NX90, and SUNTHENE series (manufactured by JAPAN SUN OIL COMPANY, LTD.); paraffin oils such as Diana Process Oil PW series (manufactured by Idemitsu Kosan Co., Ltd.), and SUNPURE LW70 and P series (manufactured by JAPAN SUN OIL COMPANY, LTD.); and aroma oils such as JSO AROMA 790 (manufactured by JAPAN SUN OIL COMPANY, LTD.) and Vivatec 500 (manufactured by H&R). As the organic acid esters, those derived from an organic acid having 2 to 10 carbon atoms in the main chain are preferable, with examples including adipate esters, phthalate esters, sebacate esters, azelate esters and citrate esters. More preferred organic acid esters and oligomers thereof are those derived from an organic acid having 4 to 8 carbon atoms in the main chain, with adipate esters being particularly preferable.

In particular, process oils are preferable from the points of view of cohesion force and compatibility and also to facilitate the control of viscosity. A more preferred plasticizer is a process oil selected from naphthene oils and paraffin oils because higher compatibility is obtained when a styrene elastomer is added to the pressure-sensitive adhesive composition and also because such a plasticizer has low selectivity for tackifier resins and can be used in a wide variety of pressure-sensitive adhesive formulations. The plasticizers may be used singly, or two or more may be used in combination.

The content of the plasticizer is 1 to 200 parts by mass per 100 parts by mass of the acrylic block copolymer (I). From the points of view of cohesion force, adhesion force and tack, the content is preferably 1 to 150 parts by mass, more preferably 3 to 100 parts by mass, and still more preferably 5 to 50 parts by mass.

The pressure-sensitive adhesive composition of the invention may contain other polymers; and additives such as softeners, heat stabilizers, light stabilizers, antistatic agents, flame retardants, foaming agents, colorants, dyes, refractive index modifiers, fillers, curing agents and anti-blocking agents, while still achieving the advantageous effects of the invention. These additional polymers and additives may be used singly, or two or more may be used in combination.

Examples of the additional polymers include acrylic resins such as polymethyl methacrylate and (meth)acrylate ester copolymers; olefin resins such as polyethylene, ethylene-vinyl acetate copolymer, polypropylene, polybutene-1, poly-4-methylpentene-land polynorbornene; ethylene ionomers; styrene resins such as polystyrene, styrene-maleic anhydride copolymer, high-impact polystyrene, AS resins, ABS resins, AES resins, AAS resins, ACS resins and MBS resins; styrene-methyl methacrylate copolymer; polyester resins such as polyethylene terephthalate, polybutylene terephthalate and polylactic acid; polyamides such as nylon 6, nylon 66 and polyamide elastomers; polycarbonates; polyvinyl chloride; polyvinylidene chloride; polyvinyl alcohols; ethylene-vinyl alcohol copolymers; polyacetals; polyvinylidene fluoride; polyurethanes; modified polyphenylene ethers; polyphenylene sulfide; silicone rubber-modified resins; acrylic rubbers; silicone rubbers; styrene-based thermoplastic elastomers such as SEPS, SEBS and SIS; and olefin rubbers such as IR, EPR and EPDM. Of these, from the point of view of the compatibility with the acrylic block copolymer (I) present in the pressure-sensitive adhesive composition, acrylic resins, ethylene-vinyl acetate copolymer, AS resins, polylactic acid, polyvinylidene fluoride and styrene-based thermoplastic elastomers are preferable, and (meth) acrylate ester copolymers are more preferable. When a styrene-based thermoplastic elastomer is added to the pressure-sensitive adhesive composition of the invention, the content thereof is preferably 1 to 65 parts by mass, more preferably 1 to 50 parts by mass, and still more preferably 1 to 30 parts by mass per 100 parts by mass of the acrylic block copolymer (I).

The above (meth)acrylate ester copolymer is preferably a diblock copolymer or a triblock copolymer which includes at least one polymer block (A) containing methacrylate ester units and at least one polymer block (B) containing acrylate ester units. (This copolymer is not the acrylic block copolymer (I).)

Examples of the fillers include inorganic fibers such as glass fibers and carbon fibers, and organic fibers; and inorganic fillers such as calcium carbonate, talc, carbon black, titanium oxide, silica, clay, barium sulfate and magnesium carbonate. The addition of inorganic fibers or organic fibers imparts durability to the pressure-sensitive adhesive composition that is obtained. The incorporation of inorganic fillers makes the obtainable pressure-sensitive adhesive composition resistant to heat and weathering.

The addition of a curing agent allows the pressure-sensitive adhesive composition of the invention to be suitably used as a curable pressure-sensitive adhesive. The curing agent may be a light curing agent such as a UV curing agent, or a heat curing agent, with examples including benzoins, benzoin ethers, benzophenones, anthraquinones, benzils, acetophenones and diacetyls. Specific examples include benzoin, α-methylolbenzoin, α-t-butylbenzoin, benzoin methyl ether, benzoin ethyl ether, benzoin-n-propyl ether, benzoin isopropyl ether, benzoin isobutyl ether, α-methylolbenzoin methyl ether, α-methoxybenzoin methyl ether, benzoin phenyl ether, benzophenone, 9,10-anthraquinone, 2-ethyl-9,10-anthraquinone, benzil, 2,2-dimethoxy-1,2-diphenylethan-1-one (2,2-dimethoxy-2-phenylacetophenone) and diacetyl. The curing agents may be used singly, or two or more may be used in combination.

To increase the effect of the curing agent, the pressure-sensitive adhesive composition of the invention may further include monomers, for example, acrylic acid, methacrylic acid, α-cyanoacrylic acid, α-halogenated acrylic acid, crotonic acid, cinnamic acid, sorbic acid, maleic acid, itaconic acid, and esters such as acrylate esters, methacrylate esters, crotonate esters and maleate esters; acrylamide; methacrylamide; acrylamide derivatives such as N-methylol acrylamide, N-hydroxyethyl acrylamide and N,N-(dihydroxyethyl) acrylamide; methacrylamide derivatives such as N-methylol methacrylamide, N-hydroxyethyl methacrylamide and N,N-(dihydroxyethyl) methacrylamide; vinyl esters; vinyl ethers; mono-N-vinyl derivatives; and styrene derivatives; and oligomers including these monomers as structural components. To attain higher durability, it is preferable to add esters such as acrylate esters, methacrylate esters, crotonate esters and maleate esters; vinyl ethers; styrene derivatives; and oligomers including these monomers as structural components. In addition to these monomers, crosslinking agents including a difunctional or polyfunctional monomer or oligomer may be added.

The incorporation of an anti-blocking agent in the pressure-sensitive adhesive composition of the invention is expected to provide an enhancement in handleability. Examples of the anti-blocking agents include fatty acids such as stearic acid and palmitic acid; fatty acid metal salts such as calcium stearate, zinc stearate, magnesium stearate, potassium palmitate and sodium palmitate; waxes such as polyethylene waxes, polypropylene waxes and montanic acid waxes; low-molecular weight polyolefins such as low-molecular weight polyethylene and low-molecular weight polypropylene; acrylic resin powders; polyorganosiloxanes such as dimethylpolysiloxane; octadecylamine, alkyl phosphates, fatty acid esters, amide resin powders such as ethylenebisstearylamide, fluororesin powders such as ethylene tetrafluoride resin, molybdenum disulfide powders, silicone resin powders, silicone rubber powders and silica.

The pressure-sensitive adhesive composition of the invention may be produced by any method without limitation. For example, the composition may be produced by mixing the components with use of a known mixer or kneader such as a kneader ruder, an extruder, a mixing roll or a Banbury mixer, usually at a temperature in the range of 100 to 250°C. Alternatively, the composition may be produced by mixing the components as a solution in an organic solvent and thereafter evaporating the organic solvent. The pressure-sensitive adhesive composition obtained may be used by being thermally melted or may be dissolved into a solvent to serve as a solution-type pressure-sensitive adhesive. Examples of the solvents include toluene, ethyl acetate, ethylbenzene, methylene chloride, chloroform, tetrahydrofuran, methyl ethyl ketone, dimethyl sulfoxide, and toluene-ethanol mixed solvent. Of these, toluene, ethylbenzene, ethyl acetate and methyl ethyl ketone are preferable.

When the pressure-sensitive adhesive composition of the invention is used by being thermally melted, it is preferable from the points of view of workability and handleability that the melt viscosity is low.

The pressure-sensitive adhesive composition of the invention is suitably used in a pressure-sensitive adhesive product in the form of, for example, a pressure-sensitive adhesive layer including the pressure-sensitive adhesive composition or a laminate (for example, a laminate film or a laminate sheet) including such a pressure-sensitive adhesive layer.

When the pressure-sensitive adhesive composition of the invention is used by being thermally melted, a pressure-sensitive adhesive layer may be made in the form of a sheet, a film or the like by a method such as, for example, hot melt coating, T-die extrusion, blown-film extrusion, calendering or lamination. When the inventive pressure-sensitive adhesive composition is used as a solution in a solvent, a pressure-sensitive adhesive layer may be formed by a method (a solution cast method) in which a flat plate or a roll of a steel belt, a heat-resistant material such as polyethylene terephthalate, or etc., is used as a substrate, and a solution obtained by dissolving the acrylic block copolymer (I) or the composition containing the acrylic block copolymer (I) in a solvent is coated onto the substrate with use of a coater such as a bar coater, a roll coater, a die coater or a comma coater, and thereafter the solvent is removed by drying.

The drying method for removing the solvent is not particularly limited and may be conventional. It is, however, preferable that drying is performed in a plurality of stages. When drying is performed in a plurality of stages, it is more preferable that drying in the first stage is performed at a relatively low temperature to prevent the formation of bubbles by rapid evaporation of the solvent, and drying in the second and later stages are performed at a high temperature to remove the solvent sufficiently.

The concentration of the acrylic block copolymer (I) or the composition including the acrylic block copolymer (I) in the solution may be determined appropriately in consideration of factors such as the solubility of the acrylic block copolymer (I) or the composition including the acrylic block copolymer (I) to the solvent, and the viscosity of the obtainable solution. A preferred lower limit is 5 mass%, and a preferred upper limit is 70 mass%.

The laminate described above may be obtained by laminating a pressure-sensitive adhesive layer including the inventive pressure-sensitive adhesive composition, together with a substrate selected from various types of substrates such as papers, cellophanes, plastic materials, fabrics, wood and metals. Because the pressure-sensitive adhesive composition of the invention has excellent transparency and weather resistance, a transparent laminate may be suitably obtained by selecting a substrate layer made of a transparent material. Examples of the substrate layers made of a transparent material include, but are not limited to, substrate layers made of polyethylene terephthalate, triacetylcellulose, polyvinyl alcohol, cycloolefin resin, styrene-methyl methacrylate copolymer, polypropylene, polyethylene, polyvinyl chloride, ethylene-vinyl acetate copolymer, polycarbonate, polymethyl methacrylate, copolymers of polymers such as polyethylene or polypropylene with various monomers, mixtures of two or more kinds of the above polymers, and glass.

Examples of the configurations of the laminates include, but are not limited to, a two-layered configuration including a pressure-sensitive adhesive layer made of the inventive pressure-sensitive adhesive composition and a substrate layer, a three-layered configuration including two substrate layers and a pressure-sensitive adhesive layer made of the inventive pressure-sensitive adhesive composition (substrate layer/pressure-sensitive adhesive layer/substrate layer), a four-layered configuration including a substrate layer, two pressure-sensitive adhesive layers (a) and (b) made of different types of the inventive pressure-sensitive adhesive compositions, and a substrate layer (substrate layer/pressure-sensitive adhesive layer (a)/pressure-sensitive adhesive layer (b)/substrate layer), a four-layered configuration including a substrate layer, a pressure-sensitive adhesive layer (a) made of the inventive pressure-sensitive adhesive composition, a pressure-sensitive adhesive layer (c) made of a material outside the scope of the invention, and a substrate layer (substrate layer/pressure-sensitive adhesive layer (a)/pressure-sensitive adhesive layer (c)/substrate layer), and a five-layered configuration including three substrate layers and two pressure-sensitive adhesive layers made of the inventive pressure-sensitive adhesive composition (substrate layer/pressure-sensitive adhesive layer/substrate layer/pressure-sensitive adhesive layer/substrate layer).

The thickness ratio in the laminate is not particularly limited. From the points of view of the pressure-sensitive adhesion properties, durability and handleability of the obtainable pressure-sensitive adhesive product, it is preferable that substrate layer/pressure-sensitive adhesive layer = 1/1000 to 1000/1, and it is more preferable that the ratio is 1/200 to 200/1.

To produce the laminate, a pressure-sensitive adhesive layer and a substrate layer may be formed separately and laminated together by a method such as lamination, or a pressure-sensitive adhesive layer may be formed directly on a substrate layer. Alternatively, a pressure-sensitive adhesive layer and a substrate layer may be coextruded to form a layered structure at the same time. That is, the laminate may be, for example, a coextruded film or a coextruded sheet.

To increase the adhesion force between the substrate layer and the pressure-sensitive adhesive layer in the inventive laminate, the surface of the substrate layer may be treated beforehand by surface treatment such as corona discharge treatment or plasma discharge treatment. Alternatively, an anchor layer may be formed by applying a resin having adhesion properties or the like onto the surface of at least one of the pressure-sensitive adhesive layer and the substrate layer.

Examples of the resins used in the anchor layers include ethylene-vinyl acetate copolymer, ionomers, block copolymers (for example, styrene triblock copolymers such as SIS and SBS, and diblock copolymers), ethylene-acrylic acid copolymer and ethylene-methacrylic acid copolymer. There may be one, or two or more anchor layers.

The anchor layer may be formed by any method without limitation. For example, an anchor layer may be formed by coating a solution of the above resin onto the substrate layer, or by thermally melting an anchoring composition which contains components including the above resin and applying the melt onto the surface of the substrate layer by a method such as T-die extrusion.

An anchor layer may be formed in such a manner that the above resin which will form an anchor layer and the inventive pressure-sensitive adhesive composition are coextruded to form simultaneously a unit including an anchor layer and a pressure-sensitive adhesive layer on the surface of the substrate layer. Alternatively, the anchoring resin and the pressure-sensitive adhesive composition may be laminated sequentially onto the surface of the substrate layer. In the case where the substrate layer is a plastic material, such a plastic material for forming the substrate layer, the resin as an anchor layer and the pressure-sensitive adhesive composition may be coextruded at the same time.

Pressure-sensitive adhesives including the pressure-sensitive adhesive composition of the invention may be used in various applications. Pressure-sensitive adhesive layers including the pressure-sensitive adhesive composition may be used singly as pressure-sensitive adhesive sheets, and laminates including such a pressure-sensitive adhesive layer may find various applications. Examples of the applications include protection such as surface protection, masking, tying, packaging, office uses, labeling, decoration and display, bonding, dicing tapes, sealing, corrosion protection, waterproofing, medical and sanitary uses, prevention of glass scattering, electrical insulation, electronic holding and fixation, semiconductor manufacturing, optical display films, pressure-sensitive adhesive optical films, shielding from electromagnetic waves, and pressure-sensitive adhesives and pressure-sensitive adhesive tapes, films or sheets for sealing electric and electronic parts. Specific examples are described below.

Surface-protective pressure-sensitive adhesives, and surface-protective pressure-sensitive adhesive tapes, films and the like may be used for various materials such as metals, plastics, rubbers and wood. Specifically, they may be used to protect the surface of coatings, metals during plastic deformation or deep drawing, automobile parts and optical parts. Examples of the automobile parts include painted exterior panels, wheels, mirrors, windows, lights and light covers. Examples of the optical parts include various image display devices such as liquid crystal displays, organic EL displays, plasma displays and field emission displays; optical disk films such as polarizing films, polarizing plates, retardation plates, light guide plates, diffusion plates and DVDs; and precision fine coated faceplates for electronic and optical applications.

Examples of the applications of masking pressure-sensitive adhesives, tapes, films and the like include masking during the manufacturing of printed circuit boards or flexible printed circuit boards; masking during the plating and soldering of electronic devices; and masking during the manufacturing of vehicles such as automobiles, during the painting of vehicles and buildings, during printing, and during parting in civil engineering works.

Examples of the tying applications include wire harnesses, electric wires, cables, fibers, pipes, coils, winding wires, steel materials, ducts, plastic bags, foods, vegetables, and flowers and ornamental plants.

Examples of the packaging applications include packaging of heavy goods, export packaging, sealing of cardboard boxes, and sealing of cans.

Examples of the office uses include general office works, sealing, repairing of books, drawing and memos.

Examples of the labeling applications include price labels, product descriptions, tags, POPs, stickers, stripes, name plates, decoration and advertisements.

Examples of the labels include labels whose substrates are paper materials such as papers, processed papers (for example, aluminum-deposited paper, aluminum-laminated paper, varnish-coated paper and resin-coated paper) and synthetic papers; and films of such materials as cellophanes, plastic materials, fabrics, wood and metals. Specific examples of the substrates include quality papers, art papers, cast papers, thermal papers, foil papers; polyethylene terephthalate films, polyvinyl chloride films, OPP films, polylactic acid films, synthetic papers, thermal synthetic papers and over laminated films. Because of its excellent transparency and weather resistance, the pressure-sensitive adhesive composition of the invention may be suitably used for labels having a transparent substrate. Further, the pressure-sensitive adhesive composition of the invention is negligibly discolored with time and thus may be suitably used for thermal labels having thermal paper or thermal synthetic paper as the substrate.

Examples of the adherends to which the labels are laminated include plastic products such as plastic bottles and foamed plastic cases; paper products and cardboard products such as cardboard boxes; glass products such as glass bottles; metal products; and other inorganic material products such as ceramics.

Labels which include a laminate including a pressure-sensitive adhesive layer formed of the pressure-sensitive adhesive composition of the invention do not significantly increase adhesion force during storage at temperatures slightly above room temperature (for example, at 60°C) and thus can be removed without residual adhesive after use. Further, such labels can be laminated to adherends even at low temperatures (-40 to +10°C) and do not release even when stored at low temperatures (-40 to +10°C).

Examples of the decoration and display applications include danger indication seals, line tapes, wire markings, luminous tapes and reflective sheets.

In the pressure-sensitive adhesive optical film applications, for example, a pressure-sensitive adhesive layer is formed on at least part or the entirety of one or both sides of such optical films as polarizing films, polarizing plates, retardation films, viewing angle expansion films, brightness enhancement films, antireflection films, antiglare films, color filters, light guide plates, diffusion films, prism sheets, electromagnetic wave shielding films, near infrared absorbing films, functional composite optical films, films for ITO lamination, impact resistant films, brightness enhancement films and visibility enhancement films. The pressure-sensitive adhesive optical films may be such that the surface of the above optical films is protected with a protective film which is a pressure-sensitive adhesive layer formed of the inventive pressure-sensitive adhesive composition. The pressure-sensitive adhesive optical films may be suitably used for various image display devices such as liquid crystal display devices, PDPs, organic EL display devices, electronic papers, game machines and mobile terminals.

Examples of the electrical insulation applications include protective coating or insulation of coils, and interlayer insulation in motors, transformers and the like.

Examples of the electronic holding and fixation applications include carrier tapes, packaging, fixation of cathode-ray tubes, splicing and rib enforcement.

Examples of the semiconductor manufacturing applications include protection of silicone wafers.

Examples of the bonding applications include various bonding uses, bonding uses in automobiles, trains, electrical equipment, printing plate fixation, architecture and nameplate fixation, general household uses, and bonding to rough surfaces, irregular surfaces and curved surfaces.

Examples of the sealing applications include sealing for the purposes of thermal insulation, vibration insulation, waterproofing, moisture proofing, soundproofing and dust proofing.

Examples of the corrosion protection and waterproofing applications include corrosion protection of gas pipes and water pipes, corrosion protection of large-diameter pipes, and corrosion protection of civil engineering and construction structures.

Examples of the medical and sanitary applications include percutaneous absorption drug applications such as analgesics and antiphlogistics (plasters and cataplasms), ischemic heart disease treatment agents, female hormone supplements, bronchodilators, cancer pain relievers, stop-smoking drugs, cold patches, antipruritic patches and keratin softening agents; various tape applications such as first-aid adhesive plasters (containing fungicides), surgical dressings, surgical tapes, bandages, hemostasis ties, tapes for human excrement disposal devices (colostomy device-fixing tapes), suture tapes, antibacterial tapes, fixing tapes, pressure-sensitive adhesive bandages, oral mucosal tapes, sporting tapes and hair removal tapes; cosmetic applications such as facial packs, eye moisturizing sheets and horny remover packs; cooling sheets, pocket warmers, dust proofing, waterproofing and pest trapping.

Examples of the electronic and electric parts to be sealed include liquid crystal monitors and solar cells.

### EXAMPLES

The present invention will be described in greater detail based on the following discussions such as Examples. However, the scope of the invention is not limited to such Examples.

Properties in Examples and Comparative Examples were measured or evaluated by the following methods.

### (1) Number average molecular weight (Mn), weight average molecular weight (Mw) and molecular weight distribution (Mw/Mn) of acrylic block copolymers (I-1) and (C-1)

The molecular weights were determined by gel permeation chromatography (hereinafter, abbreviated as GPC) relative to polystyrene standards.
apparatus: GPC apparatus "HLC-8020" manufactured by TOSOH CORPORATION
separation columns: "TSKgel GMHXL", "G4000HXL" and "G5000HXL" manufactured by TOSOH CORPORATION were connected in series.
• Eluent: tetrahydrofuran
• Flow rate of eluent: 1.0 ml/min
• Column temperature: 40°C
• Detection method: differential refractive index (RI)

### (2) Contents of polymer blocks in acrylic block copolymers (I-1) and (C-1)

These contents were determined by ¹H-NMR measurement.
- Apparatus: nuclear magnetic resonance apparatus "JNM-ECX400" manufactured by JEOL Ltd.
- Solvent: deuterated chloroform

In a ¹H-NMR spectrum, the signals at near 3.6 ppm and near 4.0 ppm were assigned to an ester group (-O-CH3) in a methyl methacrylate unit and an ester group (-O-CH₂-CH₂-CH₂-CH₃ or -O-CH₂-CH(-CH₂-CH₃)-CH₂-CH₂-CH₂-CH₃) in a n-butyl acrylate or 2-ethylhexyl acrylate unit, respectively. The contents of polymer blocks were determined based on the integral ratio of such peaks.

### (3) Compatibility

The compatibility was evaluated based on the appearance of a 25 µm thick pressure-sensitive adhesive tape fabricated by a method described later. In Table 2, "AA" indicates that the pressure-sensitive adhesive tape was colorless and transparent without any white turbidity (high compatibility), "BB" the tape had some transparency but was slightly whitish (medium compatibility), and "CC" the tape was white turbid (not compatibilized).

### (4) 180° Peel strength

A 25 µm thick pressure-sensitive adhesive tape was cut to a width of 25 mm and a length of 100 mm and was laminated to a stainless steel (SUS304) plate (a bright annealed (hereinafter, written as BA) plate) and to a polyethylene (PE) plate. The samples were stored at room temperature (for 24 hours after the lamination, unless otherwise mentioned), and the tape was peeled at 23°C and at a rate of 300 mm/min in the 180° direction to measure the peel strength. If stick slip occurred, the maximum value was taken as the peel strength.

### (5) Holding power

The holding power was measured in accordance with ASTM D4498. Specifically, a 25 µm thick pressure-sensitive adhesive tape was laminated to a stainless steel (SUS304) plate (a BA plate) over an area of 25 mm in width and 25 mm in length, and a 500 g load was hung from the tape. The temperature was increased from 40°C to 205°C at a rate of 0.5°C/min. The temperature at which the tape fell was measured. The higher the temperature, the higher the holding power.

### (6) Ball tack

The ball tack was measured in accordance with JIS Z0237. Specifically, a 25 µm thick pressure-sensitive adhesive tape was arranged so as to have an inclination angle of 30°, and balls conforming to the ball tack method were rolled thereon to determine the number of the largest ball which stopped on the pressure-sensitive adhesive tape.

### (7) 90 ° Peel creep

At a temperature of 23°C, a 25 µm thick pressure-sensitive adhesive tape (25 mm × 150 mm) was laminated to a stainless steel (SUS304) plate (a BA plate) so that the laminated area was 25 mm × 100 mm. The rest of the tape was folded so that the pressure-sensitive adhesive side would be inwardly bent. The stainless steel plate was then fixed horizontally with the pressure-sensitive adhesive tape facing downward, and a 30 g load was hung from the folded portion. The test piece was allowed to stand at a temperature of 23°C, and the time required for the tape to fall or the length in which the tape had been peeled in 60 minutes was measured.

### (8) Melt viscosity

A 1 mm thick sheet fabricated by a method described later was tested under the following conditions to determine the melt viscosity.
apparatus: BROOKFIELD PROGRAMMABLE DV-II+ VISCOMETER
• Measurement temperature: 220 to 240°C
• Spindle: No. 29

Acrylic block copolymers (I-1) and (C-1) used in Examples and Comparative Examples were synthesized by the methods described in the following synthetic examples.

### «Synthetic Example 1» [Synthesis of acrylic block copolymer (I-1)]

(1) The inside of a 2 L three-necked flask was purged with nitrogen. While performing stirring at room temperature, the flask was loaded with 939 g of toluene and 44.9 g of 1,2-dimethoxyethane, subsequently with 35.7 g of a toluene solution containing 17.9 mmol of isobutylbis(2,6-di-t-butyl-4-methylphenoxy)aluminum, and further with 3.29 g of a solution of sec-butyllithium in cyclohexane which contained 5.61 mmol of sec-butyllithium.
(2) Subsequently, 40.1 g of methyl methacrylate was added. The reaction liquid was yellow at first and turned to colorless after stirring was performed at room temperature for 60 minutes.
(3) Subsequently, the inside temperature of the polymerization liquid was lowered to -30°C, and 297 g of 2-ethylhexyl acrylate was added dropwise over a period of 2 hours. After the completion of the dropwise addition, the mixture was stirred at -30°C for 5 minutes.
(4) Further, 43.6 g of methyl methacrylate was added, and the mixture was stirred at room temperature overnight.
(5) The polymerization reaction was terminated by the addition of 3.50 g of methanol. The resultant reaction liquid was poured into 15 kg of methanol, and thereby a liquid deposit was precipitated. Thereafter, the liquid deposit was recovered and dried. Consequently, 370 g of an acrylic block copolymer (I-1) was obtained.

### «Synthetic Example 2» [Synthesis of acrylic block copolymer (C-1)]

(1) The inside of a 2 L three-necked flask was purged with nitrogen. While performing stirring at room temperature, the flask was loaded with 868 g of toluene and 43.4 g of 1,2-dimethoxyethane, subsequently with 60.0 g of a toluene solution containing 40.2 mmol of isobutylbis(2,6-di-t-butyl-4-methylphenoxy)aluminum, and further with 2.89 g of a solution of sec-butyllithium in cyclohexane which contained 5.00 mmol of sec-butyllithium.
(2) Subsequently, 35. 9 g of methyl methacrylate was added. The reaction liquid was yellow at first and turned to colorless after stirring was performed at room temperature for 60 minutes.
(3) Subsequently, the inside temperature of the polymerization liquid was lowered to -30°C, and 240 g of n-butyl acrylate was added dropwise over a period of 2 hours. After the completion of the dropwise addition, the mixture was stirred at -30°C for 5 minutes.
(4) Further, 35.9 g of methyl methacrylate was added, and the mixture was stirred at room temperature overnight.
(5) The polymerization reaction was terminated by the addition of 3.50 g of methanol. The resultant reaction liquid was poured into 15 kg of methanol, and thereby a deposit was precipitated. Thereafter, the deposit was recovered and dried. Consequently, 310 g of an acrylic block copolymer (C-1) was obtained.

Table 1 describes the structures of the acrylic block copolymers (I-1) and (C-1) obtained in Synthetic Examples 1 and 2, the contents of polymer blocks, and the copolymers' number average molecular weights (Mn), weight average molecular weights (Mw) and molecular weight distributions (Mw/Mn).

[Table 1]

**Table 1**

| Acrylic block copolymer | (I-1) | (C-1) |
|---|---|---|
| Structure | (A)-(B)-(A) triblock | (A)-(B)-(A) triblock |
| Content of polymer block (A) (%) | 22.8 | 23.5 |
| Content of polymer block (B) (%) | 77.2 | 76.5 |
| Structural unit of polymer block (A)^{*)} | MMA | MMA |
| Structural unit of polymer block (B)^{*)} | 2EHA | nBA |
| Number average molecular weight (Mn) | 67900 | 60100 |
| Weight average molecular weight (Mw) | 76500 | 71100 |
| Molecular weight distribution (Mw/Mn) | 1.13 | 1.18 |

| | | |
|---|---|---|
| *) MMA: methyl methacrylate 2EHA: 2-ethylhexyl acrylate, nBA: n-butyl acrylate | | |

In Examples and Comparative Examples, the following were used as tackifier resins and plasticizers. The iodine values of the tackifier resins are values measured in accordance with JIS K0070 as follows. A prescribed amount of a sample was dissolved into chloroform and the solution was reacted with an iodine monochloride solution (a Wijs reagent). Thereafter, a potassium iodide solution was added, and the solution was titrated with a sodium thiosulfate solution. Tackifier resins:
- Trade name "ARKON M90" manufactured by ARAKAWA CHEMICAL INDUSTRIES, LTD., hydrogenated alicyclic hydrocarbon resin, softening point 90°C, iodine value 8 g
- Trade name "ARKON P90" manufactured by ARAKAWA CHEMICAL INDUSTRIES, LTD., hydrogenated alicyclic hydrocarbon resin, softening point 90°C, iodine value 5 g
- Trade name "CLEARON K4100" manufactured by YASUHARA CHEMICAL CO., LTD., hydrogenated terpene resin, softening point 100°C, iodine value 15 g
- Trade name "PENSEL D160" manufactured by ARAKAWA CHEMICAL INDUSTRIES, LTD., polymerized rosin ester, softening point 160°C, iodine value 180 g
- Trade name "PINECRYSTAL ME-G" manufactured by ARAKAWA CHEMICAL INDUSTRIES, LTD., liquid rosin derivative Plasticizers:
- Trade name: "SUNPURE NX90" manufactured by JAPAN SUN OIL COMPANY, LTD., naphthene process oil
- Trade name "Diana Process Oil PW90" manufactured by Idemitsu Kosan Co., Ltd., paraffin process oil
- Trade name "ARUFON UP1000" manufactured by TOAGOSEI CO. , LTD., acrylic oligomer

### «Examples 1 to 7 and Comparative Examples 1 to 8»

The acrylic block copolymers (I-1) and (C-1) prepared in Synthetic Examples 1 and 2, the tackifier resins and the plasticizers were dissolved into toluene in a mass ratio described in Table 2 below to give toluene solutions which contained 40 mass% pressure-sensitive adhesive composition. The solutions were each coated onto a polyethylene terephthalate film (TOYOBO ESTER film E5000 manufactured by TOYOBO CO., LTD., thickness 50 µm) with a coater so that the dry thickness of the pressure-sensitive adhesive layer would be 25 µm. The film was dried and heat treated at 60°C for 30 minutes. Pressure-sensitive adhesive tapes were thus fabricated. When a need arose to laminate the pressure-sensitive adhesive tape to an adherend for evaluation, a 2 kg roller was moved on the tape back and forth twice at a speed of 10 mm/sec.

The pressure-sensitive adhesive tapes were tested by the methods described hereinabove to evaluate their properties, the results being described in Table 2.

[Table 2]

**Table 2**

| | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|---|---|---|---|---|---|
| Acrylic block copolymers | (I-1) | 100 | 100 | 100 | 100 | 100 | 100 | 100 | 100 | | | | | | | |
| | (C-1) | | | | | | | | | 100 | 100 | 100 | 100 | 100 | 100 | 100 |
| Tackifier resins | ARKON M90 | 35 | 35 | | | | | 30 | 35 | 35 | 35 | 35 | | | | |
| | ARKON P90 | | | 35 | 35 | | | | | | | | 35 | 35 | | |
| | CLEARON K4100 | | | | | 35 | | | | | | | | | 35 | |
| | PENSEL D160 | | | | | | 35 | | | | | | | | | 35 |
| | PINECRYSTAL ME-G | | | | | | | 5 | | | | | | | | |
| Plasticizers | NX90 | 20 | | 20 | | 20 | 20 | 20 | | 20 | | | 20 | | 20 | 20 |
| | PW90 | | 20 | | 20 | | | | | | 20 | | | 20 | | |
| | UP1000 | | | | | | | | 20 | | | 20 | | | | |
| Compatibility | | AA | AA | AA | AA | AA | BB | AA | AA | CC | CC | CC | CC | CC | CC | CC |
| 180° Peel strength (SUS) | | 6.3 | 2.9 | 7.2 | 7.1 | 6.7 | 14.6 | 4.2 | 6.4 | 16.1* | - | - | - | 15.2* | - | - |
| 180° Peel strength (PE) | | 5.5 | 4.0 | 3.5 | 3.8 | 1.9 | 7.7 | 1.0 | 11.0 | 10.5* | - | - | - | 12.4*, ****** | - | - |
| Holding power | | 169 | 168 | 174 | 176 | 158 | 150 | 159 | 143 | 127 | - | - | - | 126 | - | - |
| Ball tack | | 5 | 5 | 7 | 8 | 5 | 6 | < 3 | 7 | 5 | - | - | - | 8 | - | - |
| 90° Peel creep (SUS) | | 37 mm | 70 mm | 13 mm | 46 mm | 43 mm | 0 mm | 27'31 " | 6' 35" | 0 mm | - | - | - | 0 mm | - | - |

| | | | | | | | | | | | | | | | | |
|---|---|---|---|---|---|---|---|---|---|---|---|---|---|---|---|---|
| *: Residual adhesive **: Stick slip | | | | | | | | | | | | | | | | |

### «Example 8 and Comparative Examples 9 and 10»

The acrylic block copolymer (I-1), the tackifier resin and the plasticizers were dissolved into toluene in a mass ratio described in Table 3 below to give 30 mass% toluene solutions. Sheets having a thickness of 1 mm were prepared by the solution cast method. The melt viscosity was measured by the method described hereinabove. The results are described in Table 3.

[Table 3]

**Table 3**

| | | Ex. 8 | Comp. Ex. 9 | Comp. Ex. 10 |
|---|---|---|---|---|
| Acrylic block copolymer | (I-1) | 100 | 100 | 100 |
| Tackifier resin | ARKON M90 | 35 | 35 | 35 |
| Plasticizers | NX90 | 200 | 0 | 0 |
| | UP1000 | 0 | 200 | 0 |
| Melt viscosity (mPa·s) | 220°C | 240,000 | Below 100 | Above 3,000,000 |
| | 240°C | 8,500 | Below 100 | Above 3,000,000 |

The inventive pressure-sensitive adhesives contained the acrylic block copolymer (I-1) in which not less than 80 mass% of the acrylate ester units constituting the polymer block (B) were the acrylate ester (1) units. As seen from the results in Table 2, the pressure-sensitive adhesive tapes fabricated using these pressure-sensitive adhesives were transparent and were thus shown to have excellent compatibility. In particular, the compatibility obtained in Examples 1 to 5 and 7 was so high that the toluene solutions were free from coloration and the pressure-sensitive adhesive tapes obtained were colorless and had very high transparency. The inventive pressure-sensitive adhesive in Example 6 which contained the acrylic block copolymer (I-1) and PENSEL D160 as the tackifier resin was shown to be relatively poor in compatibility and the pressure-sensitive adhesive tape obtained was slightly white turbid, although having transparency, and coloration was observed in the toluene solution. The inventive pressure-sensitive adhesives exhibited excellent pressure-sensitive adhesive performance to stainless steel and polyethylene, and were peeled clean without any residual adhesives. In contrast, Comparative Examples 2 to 6 resulted in poor compatibility and the pressure-sensitive adhesive tapes were whitish because of the fact that the polymer block in the acrylic block copolymer (C-1) which corresponded to the polymer block (B) was composed solely of n-butyl acrylate. Further, the peel strength tests in Comparative Examples 2 and 6 resulted in residual adhesives because the pressure-sensitive adhesives were so poorly compatibilized that their cohesion force was low.

As seen from the results in Table 3, Example 8 which involved a process oil as the plasticizer attained a low viscosity and thus achieved good workability as compared to Comparative Example 10 which used no plasticizers. Comparative Example 9 which involved an acrylic oligomer as the plasticizer resulted in a markedly low viscosity as compared to Example 8. In spite of the fact that the ratios of the components were the same, Example 8 avoided an excessive decrease in viscosity. That is, the viscosity of the pressure-sensitive adhesive composition can be easily controlled and good handleability can be attained by controlling the amounts of the components. Further, the addition of such a large amount of the plasticizer allows the cost of the pressure-sensitive adhesive composition as a whole to be reduced.

### INDUSTRIAL APPLICABILITY

The pressure-sensitive adhesive compositions of the present invention have excellent durability such as heat resistance and weather resistance, hot melt workability and pressure-sensitive adhesion properties, exhibit excellent adhesion force, cohesion force, tack and holding power, and are easily controlled in viscosity. The invention makes it possible to provide pressure-sensitive adhesives and pressure-sensitive adhesive products capable of maintaining excellent pressure-sensitive adhesive performance over a long period even when exposed to UV lights, hot and humid conditions, or low temperatures. Further, the pressure-sensitive adhesive compositions of the invention can be supplied in easily handleable forms such as pellets and are useful in industry.

## Claims

1. A pressure-sensitive adhesive composition comprising:
(i) 100 parts by mass of an acrylic block copolymer (I) including at least one polymer block (A) containing methacrylate ester units and at least one polymer block (B) containing acrylate ester units, the acrylic block copolymer (I) having a weight average molecular weight of 30,000 to 300,000, the acrylate ester units in the polymer block (B) including not less than 80 mass% of units from an acrylate ester (1) represented by the general formula (1):
CH₂=CH-COOR²
(wherein R² is an organic group having 7 to 12 carbon atoms);
(ii) 1 to 300 parts by mass of a tackifier resin; and
(iii) 1 to 200 parts by mass of at least one plasticizer selected from process oils, and organic acid esters and oligomers thereof.

2. The pressure-sensitive adhesive composition according to Claim 1, wherein the plasticizer (iii) is a process oil.

3. The pressure-sensitive adhesive composition according to Claim 1 or 2, wherein the tackifier resin (ii) is at least one selected from hydrocarbon resins, terpene resins, rosin resins and hydrogenated products of these resins.

4. The pressure-sensitive adhesive composition according to any of Claims 1 to 3, wherein the acrylate ester (1) represented by the formula (1) is 2-ethylhexyl acrylate.

5. The pressure-sensitive adhesive composition according to any of Claims 1 to 4, wherein the acrylate ester units in the polymer block (B) consist solely of units from an acrylate ester (1) represented by the general formula (1):
CH₂=CH-COOR²
(wherein R² is an organic group having 7 to 12 carbon atoms).

6. The pressure-sensitive adhesive composition according to any of Claims 1 to 5, wherein the composition includes two or more kinds of tackifier resins (ii).

7. A pressure-sensitive adhesive product comprising a pressure-sensitive adhesive layer including the pressure-sensitive adhesive composition described in any of Claims 1 to 6.

8. A laminate comprising a pressure-sensitive adhesive layer including the pressure-sensitive adhesive composition described in any of Claims 1 to 6.

9. A film comprising a pressure-sensitive adhesive layer including the pressure-sensitive adhesive composition described in any of Claims 1 to 6.
